# EUROPEAN PATENT SPECIFICATION

(11) **EP 4 435 618 B1**
(45) Date of publication and mention of the grant of the patent: **22.04.2026**
(21) Application number: 24163657.0
(22) Date of filing: 14.03.2024
(51) Int. Cl.: G06F 13/42

(54) **DEVICE FOR CONTROLLING STATE MACHINE AND METHOD OF OPERATING THE SAME**
VORRICHTUNG ZUR STEUERUNG EINER ZUSTANDSMASCHINE UND VERFAHREN ZUM BETRIEB DAVON
DISPOSITIF DE COMMANDE DE MACHINE D'ÉTAT ET SON PROCÉDÉ DE FONCTIONNEMENT

(30) Priority: 24.03.2023 KR 20230038613
(43) Date of publication of application: 25.09.2024
(73) Proprietor: Samsung Electronics Co., Ltd., Suwon-si, Gyeonggi-do 16677 (KR)
(72) Inventor: JEONG, Jong Heon, 16677 Suwon-si (KR)
(74) Representative: Marks & Clerk LLP

(56) References cited:
- US-B1- 7 136 953
- PERIPHERAL COMPONENT INTERCONNECT SPECIAL INTEREST GROUP, PERIPHERAL COMPONENT INTERCONNECT SPECIAL INTEREST GROUP, 3855 SW 153RD DRIVE BEAVERTON, OR 97003, US, 7 April 2020 (2020-04-07), XP040733213

## Description

### BACKGROUND

The present disclosure relates to a device for controlling a state machine and a method of operating the same.

A peripheral component interconnect express (PCIe) interface protocol is widely used in the computing industry to facilitate high-speed data transmission. The PCIe interface protocol provides a bidirectional connection, capable of simultaneously transmitting and receiving data. PCIe devices, communicating through the PCIe interface protocol, require a process of configuring a link to communicate with each other.
US 7136953 B1 describes an apparatus, system and method for bus link width optimization.

### SUMMARY

It is an aspect to provide a device for preventing a conflict of transition operations between states in a state machine and a deadlock state in a state, and a method of operating the same.

According to an aspect of one or more example embodiments, there is provided a device comprising a port connected to a link comprising one or more lanes to support communication between the device and another device; and a controller configured to control the link based on a link training and status state machine (LTSSM). The port receives two received sequences, each defined as a training sequence, through the link in a recovery state included in the LTSSM, the training sequence comprising a first symbol including a lane number or a special symbol, and a second symbol including a loopback bit, and the controller transitions from the recovery state to a loopback state included in the LTSSM, based on the first symbol including the lane number and the loopback bit being set to an active logic state, for both of the two received sequences.

According to an aspect of one or more example embodiments, there is provided a method of operating a device, the method comprising receiving two received sequences, each defined as a training sequence, through a link comprising one or more lanes in a recovery state included in a link training and status state machine (LTSSM), the training sequence comprising a first symbol including a lane number or a special symbol, and a second symbol including a loopback bit; and transitioning from the recovery state to a loopback state included in the LTSSM, based on the first symbol including the lane number and the loopback bit being set to an active logic state, for both of the two received sequences.

According to an aspect of one or more example embodiments, there is provided a storage device comprising a nonvolatile memory; a port connected to a link, comprising one or more lanes, to support communication between the storage device and another device; and a controller connected to the nonvolatile memory and the port and configured to control the link based on a link training and status state machine (LTSSM). The controller is configured to control the port to receive two received sequences, each defined as a training sequence, in a recovery state included in the LTSSM, the training sequence comprising a first symbol including a lane number or a special system, and a second symbol including a loopback bit; and transition from the recovery state to a loopback state included in the LTSSM, based on the first symbol including the lane number and the loopback bit being set to an active logic state, for both of the two received sequences.

At least some of the above and other features of the disclosure are set out in the claims.

### BRIEF DESCRIPTION OF DRAWINGS

The above and other aspects will be more clearly understood from the following detailed description, taken in conjunction with the accompanying drawings.
FIG. 1 is a diagram illustrating a peripheral component interconnect express (PCIe) link.
FIG. 2 is a diagram illustrating an example of a layer model, according to an example embodiment.
FIG. 3 is a diagram illustrating an electronic system according to an example embodiment.
FIG. 4 is a diagram illustrating a training sequence according to an example embodiment.
FIG. 5 is a diagram illustrating a plurality of bits included in a symbol 4 of FIG. 4, according to an example embodiment.
FIG. 6 is a diagram illustrating an example of a state machine, according to some example embodiments.
FIG. 7 is a diagram illustrating an example of a transition operation in a set state, according to some example embodiments.
FIG. 8 is a diagram illustrating an example of a transition operation in a recovery state, according to some example embodiments.
FIG. 9 is a diagram illustrating an example of a collision between transitions in a recovery state.
FIG. 10 is a diagram illustrating a method of prioritizing transitions in a recovery state according to an example embodiment.
FIG. 11 is a diagram illustrating an operation in a loopback state according to an example embodiment.
FIG. 12 is a diagram illustrating an operation in a loopback state according to an example embodiment.
FIG. 13 is a diagram illustrating a speed change bit for each state according to an example embodiment.
FIG. 14 is a diagram illustrating an operation of setting flag bits according to an example embodiment.
FIG. 15 is a diagram illustrating a transition operation between states included in an LTSSM according to an example embodiment.
FIG. 16 is a diagram illustrating a state transition operation between ports according to an example embodiment.
FIG. 17 is a flowchart illustrating a method of operating a device according to an example embodiment.
FIG. 18 is a flowchart illustrating a state transition operation method of a device according to an example embodiment.
FIG. 19 is a flowchart illustrating a data rate change operation method according to an example embodiment.
FIG. 20 is a flowchart illustrating a flag bit configuration operation method according to an example embodiment.
FIG. 21 is a diagram illustrating a device according to an example embodiment.
FIG. 22 is a diagram illustrating a storage device according to an example embodiment.

### DETAILED DESCRIPTION

Hereinafter, example embodiments will be described with reference to the accompanying drawings.

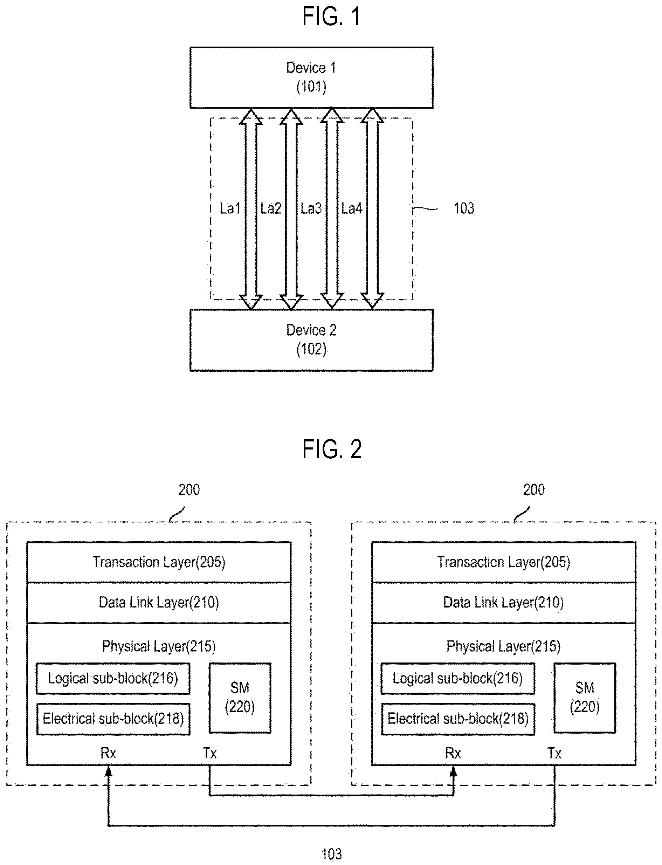

FIG. 1 is a diagram illustrating a peripheral component interconnect express (PCIe) link, according to an example embodiment.

Referring to FIG. 1, a PCIe may support an interaction between two components. The components may transmit and receive a packet to and from each other through a link 103. The component may correspond to a physical device transmitting and receiving a packet through the link 103. For ease of description, the two components connected through the link 103 may be referred to as devices including a first device 101 and a second device 102.

The link 103 may correspond to a dual-simplex communications channel connecting ports of the two components to each other. A port may be defined as an interface between the link 103 and the two components from a logical perspective, and may be defined as a group of transceivers defining the link 103 from a physical perspective. Accordingly, in the present specification, objects disposed on opposite ends of the link 103 may be described as ports as well as components including devices.

The link 103 may include one or more lanes La1, La2, La3, and La4 between the two ports. Each of the lanes La1, La2, La3, and La4 may include a transmit pair and a receive pair, two differential driving signal pairs. That is, for example, the lane La1 may include a transmit pair and a receive pair, the lane La2 ma include a transmit pair and a receive pair, and so on. A data clock used in the link 103 may be embedded using an encoding scheme to achieve a significantly high data rate. The link 103 may aggregate a plurality of lanes La1, La2, La3, and La4 to extend a bandwidth. The lanes La1, La2, La3, and La4 included in the link 103 may be denoted by xN (where N is a width of a lane). For example, lanes supported by PCIe are x1, x2, x4, and x8, and x16. During hardware initialization, the link 103 may be configured based on lane width negotiation and operating frequency negotiation by the two components on opposite ends of the link 103. Each link 103 may support a number of lanes, symmetrical in each direction. For example, the x16 link may include 16 differential signal pairs in each direction.

FIG. 2 is a diagram illustrating an example of a layer model, according to an example embodiment.

Referring to FIG. 2, a layer model 200 may be referred to as a protocol stack.

The layer model 200 may include a transaction layer 205, a data link layer 210, and a physical layer 215. Each layer may include a portion, processing transmitted outbound information, and a portion processing received inbound information.

Information may be transmitted between two components through packets. Packets may be formed in the transaction layer 205 and the data link layer 210 to transfer information from a transmission component to a reception component. Additional information, used to process a transfer packet in another layer when the transfer packet passes through the layer, may be extended. At a reception side, a reverse process may occur and packets may be transferred to the transaction layer 205 via the physical layer 215 and the data link layer 210.

### Transaction Layer 205

The transaction layer 205 may be an uppermost layer, and may be responsible for assembly and disassembly of transaction layer packets (TLPs). The TLPs may be used for transactional communications such as a read operation and a write operation, as well as specific types of events. The transaction layer 205 may manage credit-based flow control for TLPs. All request packets, requiring response packets, may be implemented as split transactions. Each packet has a unique identifier allowing a response packet to be transmitted to a correct component. A packet format may support different types of addressing based on the type of transaction (memory, I/O, configuration, or message). The transaction layer 205 may support four address spaces. For example, four address spaces may include three PCI address spaces (memory, I/O, and configuration spaces), and a message space may be added thereto.

### Data Link Layer 210

The data link layer 210, an intermediate layer, may serve as an intermediate stage between the transaction layer 205 and the physical layer 215. The data link layer 210 may be responsible for link management and data integrity, including error detection and error correction. A transmission side of the data link layer 210 may receive the TLPs, assembled by the transaction layer 205, to calculate and apply a data protection code and a TLP sequence number and may transfer the assembled TLPs to the physical layer 215 for transmission through the link 103. A reception side of the data link layer 210 may identify integrity of the received TLPs and may transfer the identified TLPs to the transaction layer 205 for further processing. When an error is detected in the TLPs, the data link layer 210 may request retransmission of the TLPs until it is determined that either information has been received to be correct or the link 103 has failed. The data link layer 210 may generate and consumes packets used for a management function of the link 103. The packets of the data link layer 210 may be referred to as DLPs or data link layer packets (DLLPs) to be distinguished from the packets used in the transaction layer 205.

### Physical Layer 215

The physical layer 215, a lowermost layer, may include all circuits for interface operation such as a driver, an input buffer, parallel-to-serial (PS) and serial-to-parallel (SP) converters, a phase-locked loop (PLL), and an impedance matching circuit. The physical layer 215 may include logical functions associated with interface initialization and maintenance. The physical layer 215 may exchange information with the data link layer 210 in an appropriate format. The physical layer 215 may convert the information, received from the data link layer 210, into a serial format and may transmit the converted information through the link 103 at a frequency and a width compatible with other components.

The physical layer 215 may include a logical sub-block 216 and an electrical sub-block 218 to physically transmit packets to another device. The logical sub-block 216 may be responsible for 'digital' functions of the physical layer 215. For example, logical sub-block 216 may include a transmission unit, preparing outbound information for transmission by the electrical sub-block 218, and a reception unit identifying and preparing information received before transmitting the outbound information to the data link layer 210.

The electrical sub-block 218 may include a transmitter and a receiver. The transmitter may be provided with symbols by the logical sub-block 216, and may serialize and transmit the received symbols to another device. The receiver may be provided with the serialized symbols from another device, and may convert a received signal into a bitstream. The bitstream may be de-serialized and then provided to the logical sub-block 216.

Each physical layer 215 may include a state machine (SM) 220. The state machine 220 may be defined as a set of states for exchanging and controlling state information of the PCIe link 103. The state machine 220 may have a plurality of states, responsible for various link operations, and each of the plurality of states may have a sub-state. For example, the state machine 220 may include a link training and status state machine (LTSSM).

Although an example of a PCIe stack is illustrated in FIG. 2, the layer model 200 may include, for example, a PCIe stack, a quick path interconnect (QPI) stack, a next-generation high performance computing interconnect stack, or other various types of layers protocol stacks. For example, a configuration of the layer model 200 may include a first layer assembling or disassembling packets, a second layer stably transferring packets between the first layer and a third layer, and the third layer transmitting and receiving the packets. In this configuration, the third layer may include the state machine 220.

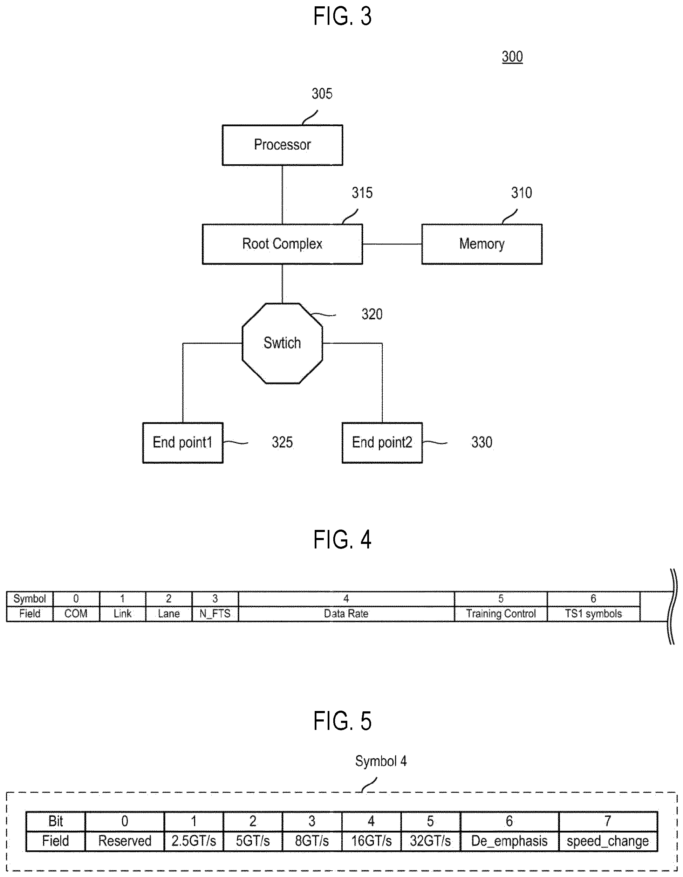

FIG. 3 is a diagram illustrating an electronic system according to an example embodiment.

Referring to FIG. 3, an electronic system 300 according to an example embodiment may include a processor 305, a memory 310, a root complex (RC) 315, a switch 320, and a plurality of endpoints 325 and 330. For example, the processor 305, the root complex 315, the switch 320, and the plurality of endpoints 325 and 330 may each correspond to an above-described component.

The processor 305 may control the overall operation of the electronic system 300. For example, the processor 305 may include at least one of a central processing unit (CPU), a graphics processing unit (GPU), an application processor (AP), or a communications processor (CP). The processor 305 may transmit and receive packets through the plurality of endpoints 325 and 330 and the root complex 315 and the switch 320.

For example, the processor 305 may correspond to a host or be included in the host.

The memory 310 may include any memory device such as a random access memory (RAM), a nonvolatile memory, or another memory accessible by devices inside the electronic system 300. The memory 310 may be connected to the root complex 315.

The root complex 315 may manage a data flow of components included in electronic system 300. For example, the root complex 315 may control a data path, schedule data transmission, or resolve communication collision. For example, the root complex 315 may support generation of a configuration request, as a requester.

In some examples, the switch 320 may be coupled to the root complex 315. The plurality of endpoints 325 and 330 may be connected to the root complex 315 through the switch 320. The switch 320 may control a data path between the root complex 315 and the plurality of endpoints 325 and 330.

The root complex 315 and the switch 320 may be implemented as various hardware circuits for data control and data transmission.

The endpoints 325 and 330 may represent the type of function which may be a requester or a completer of a PCIe transaction. The endpoints 325 and 330 may communicate with processor 305 via the root complex 315 and the switch 320. For example, the plurality of endpoints 325 and 330 may communicate with each other via the switch 320 in a peer-to-peer manner. In this case, the processor 305 may intervene in processing data exchanged between the plurality of endpoints 325 and 330.

For example, in some example embodiments, each of the endpoints 325 and 330 may be a storage device. In some example embodiments, each of the endpoints 325 and 330 may be any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices.

A data flow in a direction away from the above-described root complex 315 may be defined as a downstream, and a data flow in a direction toward the root complex 315 may be defined as an upstream. A port transmitting and receiving data in a downstream direction may be defined as a downstream port (DSP), and a port transmitting and receiving data in an upstream direction may be defined as an upstream port (USP). For example, a port included in the root complex 315 may be a downstream port. For example, a port included in the endpoints 325 and 330 may be an upstream port.

For example, the switch 320 may transmit packets/messages from a plurality of devices upstream, or transmit packets/messages from the processor 305 downstream.

According to various embodiments, the devices 101 and 102 may perform operations for setup and initialization of each link 103 for an operation in a normal state such as, for example, L0. The setup and initialization may be performed through link training operations of a physical layer. For example, at least one of a link width, a link data rate, lane reversal, and a lane polarity may be configured through a link training operation. For example, the link training operation may include at least one of link data rate negotiation, bit locking for each lane, a lane polarity, symbol locking for each line, lane ordering in the link 103, link width negotiation, or a lane-to-lane deskew.

Link training may build unassociated lanes of a port into a lane forming the link 103. The devices 101 and 102 may use a training sequence (TS) for a training operation of appropriately configuring a line as a desired link 103. The training sequence may be defined as packets transmitted and received between the devices 101 and 102 to share states of the links 103 of the devices 101 and 102 and to manage information. In an example embodiment, the training sequence may include a plurality of symbols, and each of the symbols may control unique link information. For example, the symbol may correspond to a byte unit.

For example, the training sequence may be TS1 and/or TS2 defined by the PCIe specification.

FIG. 4 is a diagram illustrating a training sequence according to an example embodiment.

Referring to FIG. 4, a training sequence may include a plurality of symbols, and each of the symbols may have a unique field. For ease of description, the symbol is illustrated as including symbol 0 to symbol 6, but example embodiments are not limited thereto. For example, the training sequence of FIG. 4 may be TS1.

The symbol 0 may represent a training sequence identifier. For example, when a data rate is 2.5 or 5.0 gigatransfers per second (GT/s), the symbol 0 may be set to 'COM.' The symbol 1 may represent a link number. The symbol 2 may represent a lane number. The symbol 3 may represent a number of a fast training sequence N_FTS. The symbol 4 may represent a data rate identifier. The symbol 5 may include a bit associated with training control. The symbol 6 may be encoded as a TS1 identifier. Symbols subsequent to the symbol 6 may comply with the PCIe specification.

For example, when a value of a bit included in each symbol of the training sequence is '0b,' it may imply that the bit has been cleared. When the value of the bit is '1b,' it may imply that the bit has been set. In this case, '0b' may be defined as an inactive logic state, and '1b' may be defined as an active logic state.

The symbol 1 and the symbol 2 may be used for link width negotiation and lane ordering negotiation. For example, the symbol 1 and the symbol 2 may have each link number or each lane number set through the negotiation, or may have a special symbol. According to the PCIe specification, the special symbol may be defined as 'PAD,' and the 'PAD' may imply that a link number or a lane number has not yet been set.

For example, the symbol 5 may include a plurality of bits, and one of the plurality of bits may be a loopback bit for training control. When the loopback bit is '1b,' for example, an active logic state, it may refer to a transition to a loopback state included in an LTSSM to be described later.

FIG. 5 is a diagram illustrating a plurality of bits included in the symbol 4 of FIG. 4, according to an example embodiment.

Referring to FIG. 5, the symbol 4 may include bit 0 through bit 7, and each bit may represent information associated with a data rate. The bit 0 may be a reserved bit for a data rate which may be supported later. The bit 1 through the bit 5 may represent 2.5, 5.0, 8, 16 and 32 GT/S, respectively. The bit 6 may represent de-emphasis.

The bit 7 may represent a speed change bit speed_change indicating a change in speed. For example, the bit 7 may allow a device, receiving a training sequence, to determine whether to maintain or change a data speed for a link operation. For example, when a value of the bit 7 is '1b,' for example, an active logic state, a change in data speed may be performed.

According to various embodiments, the bit 7 may be set in some states, among the states included in the LTSSM. The bit 7 will be described in detail later.

The devices 101 and 102 may perform a training operation while transmitting and receiving a training sequence therebetween. In other words, the device 101 may perform the training operation while transmitting and receiving a training sequence with the device 102. Similarly, the device 102 may perform the training operation while transmitting and receiving a training sequence with the device 101. The devices 101 and 102 may perform a training operation based on a state machine included in a physical layer of the device. Hereinafter, the state machine included in the above-described layer (or the third layer) will be described in detail.

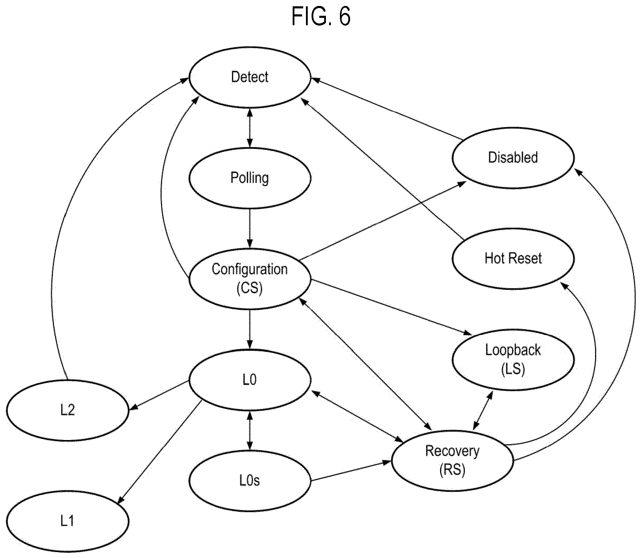

FIG. 6 is a diagram illustrating an example of a state machine, according to an example embodiment. In some example embodiments, the state machine may be a state machine of the device 101 or the device 102.

Referring to FIG. 6, the state machine may be a state machine for link training to exchange and control state information of the link 103. The state machine may be, for example, a link training and status state machine (LTSSM). The LTSSM may include a detect state, a polling state, a configuration state CS, a recovery state RS, an L0 state, an L0s state, an L1 state, an L2 state, a disabled state, a loopback state LS, and a hot reset state.

The detect state may be a state for detecting whether an end termination connected to the link 103 is present. In the polling state, bit locking and symbol locking may be performed or a lane polarity may be set. The configuration state may be a state for managing a configuration of the link 103. In the configuration state CS, the transmitter and receiver may transmit and receive data to negotiate a data rate. For example, the symbol 1 and the symbol 2 may be configured in the configuration state CS. In the recovery state RS, an error of the link 103 may be recovered or a change in data rate may be controlled. The L0 state may be a normal state in which data and control packets may be transmitted and received. The L0s and L1 states may be states for power saving. The L2 state may be a state for maximum power savings. In the L2 state, most transmitters and receivers may be turned off. The disabled state may cause the configured link 103 to be disabled. The loopback state LS may be a state in which, when it is determined that a specific device fails, the device is allowed to remain in a test state by isolating a link 103 of the device from the perspective of a host. The hot reset state may be a state for configuring the configured link 103.

According to various examples, one of the plurality of states included in the state machine may transition to one or more other states. Except for conditions for transition between states partially mentioned herein, remaining conditions for transition between states may comply with the PCIe specification.

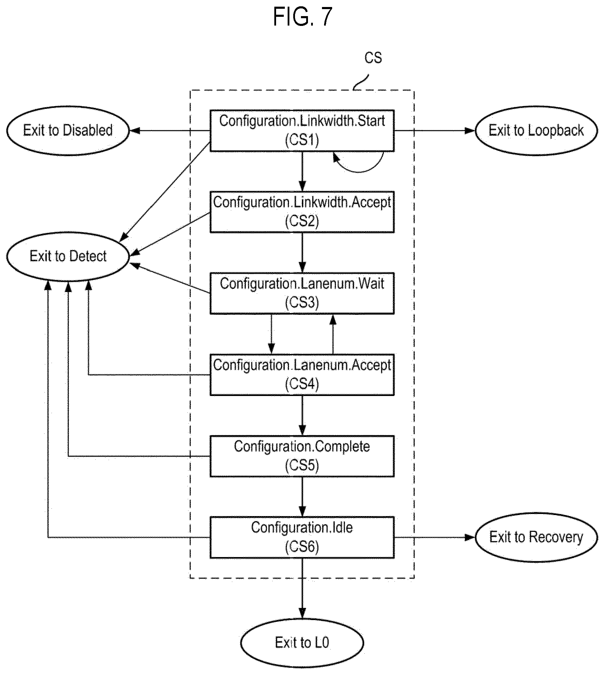

FIG. 7 is a diagram illustrating an example of a transition operation of the configuration state, according to an example embodiment.

Referring to FIG. 7, the configuration state CS may include, for example, a first configuration state Configuration.Linkwidth.Start (CS1), a second configuration state Configuration.Linkwidth.Accept (CS2), a third configuration state Configuration.Lanenum.Wait (CS3), a fourth configuration state Configuration.Lanenum.Accept (CS4), a fifth configuration state Configuration. Complete (CS5), and a sixth configuration state Configuration.Idle (CS6).

In the first configuration state CS1, a link width may be configured. For example, the first configuration state CS1 may transition to a loopback state when the devices 101 and 102 may receive two training sequences for all lanes and a loopback bit included in each training sequence is set to an active logic state. For example, the first configuration state CS1 may transition to the second configuration state CS2 when a training sequence, in which a link number and a lane number are each set to 'PAD,' is received first from one or more lanes. The second configuration state CS2 may transition to the third configuration state CS3. The third configuration state CS3 may transition to the fourth configuration state CS4. The fourth configuration state CS4 may transition to the fifth configuration state CS5, or back to the third configuration state CS3. The fifth configuration state CS5 may transition to sixth configuration state CS6.

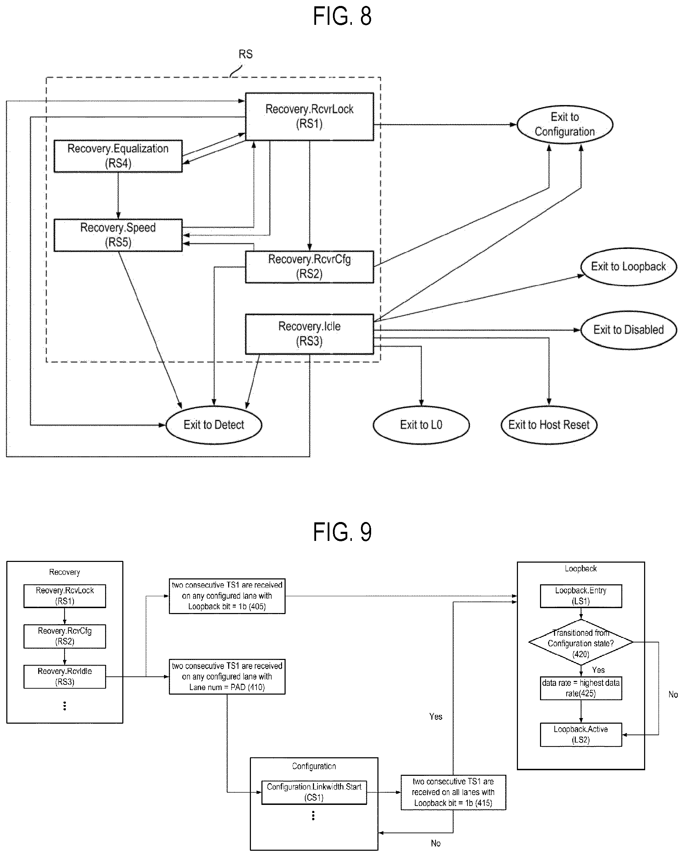

FIG. 8 is a diagram illustrating an example of a transition operation of the recovery state, according to an example embodiment.

Referring to FIG. 8, the recovery state RS may include, for example, a first recovery state Recovery.RcvrLock (RS1), a second recovery state Recovery.RcvrCfg (RS2), a third recovery state Recovery. Idle (RS3), a fourth recovery state Recovery. Equalization (RS4), and a fifth recovery state Recovery. Speed (RS5).

A transition to the first recovery state RS1 may be performed to change error occurrence or a data rate. In the second recovery state RS2, an operation may be performed to exchange variables required for equalization after the data rate is changed through the first recovery state RS1. The third recovery state RS3 may be a state for finally checking the link 103 before entering a normal state L0.

For example, the third recovery state RS3 may transition to the configuration state when the devices 101 and 102 receive two training sequences for one or more lanes and a lane number included in each training sequence is set to 'PAD.' For example, the third recovery state RS3 may transition to a loopback state when the devices 101 and 102 receive two training sequences for one or more lanes and a loopback bit included in each training sequence is set to an active logic state.

For example, the devices 101 and 102 in the third recover state RS3 receive a training sequence, a loopback bit included in a sequence received by a device (hereinafter referred to as a "received sequence" for brevity of description) may be set to an active logic state and a symbol representing a lane number may be set to 'PAD.'

For example, the first recovery state RS4 may transition to the first recovery state RS1. The first recovery state RS4 may transition to the fourth recovery state RS4. The first recovery state RS4 may transition to the fifth recovery state RS5. The second recovery state RS2 may transition to the fifth recovery state RS5. The fifth recovery state RS5 may transition to the first recovery state RS1.

FIG. 9 is a diagram illustrating an example of a collision between transitions in the recovery state.

Referring to FIG. 9, when each of the devices 101 and 102 is in the recovery state, the devices 101 and 102 may transition to the second recovery state RS2 after initially entering the first recovery state RS1, and may then transition to the third recovery state to finally check the link 103 before entering the L0 state.

According to an example embodiment, a first transition condition 405 for transition of a device from the third recovery state RS3 to the loopback state may be to receive two received sequences in which loopback bits for one or more lanes are set to an active logic state. In some example embodiments, the first transition condition 405 for transition of the device from the third recovery state RS3 to the loopback state may be to receive two consecutive received sequences in which the loopback bits for one or more lanes are set to the active logic state. In some example embodiments, the first transition condition 405 may be to receive two consecutive training sequences TS1 on any configured lane with loopback bits set to 1b. A second transition condition 410 for transition of a device from the third recovery state RS3 to the configuration state may be to receive two received sequences in which a single symbol, including a lane number or a special symbol for one or more lanes, includes the special symbol. In some example embodiments, the second transition condition 410 for transition of the device from the third recovery state RS3 to the configuration state may be to receive two consecutive received sequences in which a single symbol, including a lane number or a special symbol for one or more lanes, includes the special symbol (e.g., 'PAD'). In some example embodiments, the second transition condition 410 may be to receive two consecutive training sequences TS1 on any configured lane with lane numbers set to PAD. A third transition condition 415 for transition of a device from the configuration state to the loopback state may be to receive two received sequences in which loopback bits are set to an active logic state for all lanes. In some example embodiments, the third transition condition 415 for transition of the device from the configuration state to the loopback state may be to receive two consecutive received sequences in which the loopback bits are set to the active logic state for all lanes. In some example embodiments, the third transition condition 415 may be to receive two consecutive training sequences TS1 on all lanes with loopback bits set to 1b.

For example, a symbol for the first transition condition 405 and the third transition condition may be a symbol 2 included TS1, and a symbol for the second transition condition 410 may be a symbol 5 included in TS1.

In the devices 101 and 102 in the third recovery state RS3, a single symbol may include a special symbol, and a loopback bit included in another symbol may be set to an active logic state. In this case, the received sequence may satisfy both the first transition condition 405 and the second transition condition 410. Accordingly, the first transition condition 405 and the second transition condition 410 may be simultaneously satisfied.

When the first transition condition 405 and the second transition condition 410 are not prioritized according to the example embodiment of FIG. 9, one of the devices 101 and 102 may transition to the loop state under the first transition condition 405, and the other device of the devices 101 and 102 may transition to the configuration state under the second transition condition 410. In this case, the other device may transition to the loopback state when receiving a received sequence satisfying the third transition condition 415 in the configuration state. For example, the other device may enter the first configuration state CS1, and may then transition to the loopback state when receiving a received sequence satisfying the third transition condition 415.

The devices 101 and 102 may enter a first loopback state LS1 when transitioning to the loopback state, and a determination may then be made as to whether the device transitioned to the loopback state LS1 from the configuration state (420), i.e., the device transitioned from the configuration state (420). When the device transitioned to the loopback state LS1 from the configuration state (420, Yes), the device may change a current data rate to a maximum value (for example, a highest data rate that the device is capable of supporting) (425). The maximum value may be predetermined and may be a highest data rate. Then, the device may transition to a second loopback state LS2. On the other hand, when the device did not transition to the loopback state LS1 from the configuration state (420, No), the device may directly transition to the second loopback state LS2.

As a more detailed example, among the devices 101 and 102 transitioning to the loopback state, one device of the devices 101 and 102 directly transitioning from the third recovery state RS3 may directly transition to the second loopback state LS2. However, the other device of the devices 101 and 102 transitioning from the configuration state may have a maximum data rate, supportable according to 425. Accordingly, the devices 101 and 102 may operate at different data rates.

The operations of the link 103 of the devices 101 and 102 having different data rates are unpredictable. For example, when one device has a maximum data rate and the other device has an existing data rate, a transmit clock signal and a receive clock signal may have different frequencies, so that the devices 101 and 102 may continuously fail to decode received signals. As a result, the devices 101 and 102 may not interpret signals transmitted and received therebetween, and thus may not exit the loopback state, and the link 103 is likely to be in a semi-permanent defect state.

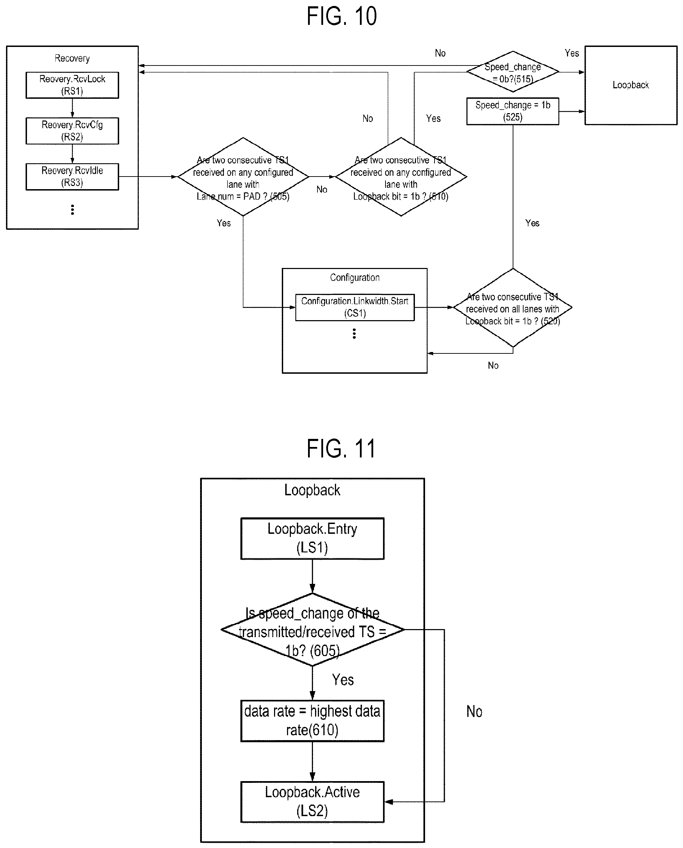

FIG. 10 is a diagram illustrating a method of prioritizing transitions in a recovery state according to an example embodiment.

Referring to FIG. 10, in an example embodiment, an order of determining a first transition condition 510 for a device transitioning from the recovery state to the loopback state and a second transition condition 505 for the device transitioning from the recovery state to the configuration state may be prioritized. For example, in some example embodiments, the second transition condition 505 may be determined prior to the first transition condition 510.

The second transition condition 505 may be determined first when a device in the third recovery state RS receives two received sequences in which a single symbol includes a special symbol and a loopback bit included in another symbol is set to an active logic state. In some examples embodiments, the second transition condition 505 may be to receive two consecutive training sequences TS1 on any configured lane with a lane number set to PAD.

When the second transition condition 505 is satisfied (505, Yes), the device may directly transition to the configuration state, e.g., CS1. For example, when a single symbol of two received sequences received for one or more lanes includes a special symbol, the device may directly transition to the configuration state.

Alternatively, when the second transition condition 505 is not satisfied (505, No), the device may determine the first transition condition 510, i.e., whether the device in the third recovery state RS receives the two received sequences in which a loopback bit included in another symbol is set to an active logic state. In some example embodiments, the first transition condition 510 may be to receive two consecutive training sequences TS1 on any configured lane with a loopback bit set to 1b. When the first transition condition 510 is satisfied (510, Yes), the device may transition to the loopback state. For example, in some example embodiments, when loopback bits of two received sequences received for one or more lanes are set to the active logic state, the device may transition to the loopback state.

Alternatively, when the first transition condition 510 is not satisfied (510, No), the device may be maintained in the recovery state.

In some example embodiments, when the first transition condition 510 is satisfied (510, Yes), prior to transitioning to the loopback state the device may determine whether a speed change bit speed_change included in the received sequence is set to '0b,', for example, an inactive logic state (515). When the speed change bit speed_change is in an inactive logic state (515, Yes), the device may transition to the loopback state. Alternatively, when the speed change bit speed_change is set to '1b,', for example, an active logic state (515, No), the device may be maintained in the recovery state.

In the case in which the device has transitioned to the configuration state, the device may transition to the loopback state when a third transition condition 520 is satisfied, e.g., when the device receives two received sequences in which loopback bits are set to an active logic state for all lanes (520, Yes). In some example embodiments, the third transition condition 520 for a device to transition from the configuration state to the loopback state may be to receive two consecutive received sequences in which the loopback bits are set to the active logic state for all lanes. In some example embodiments, the third transition condition 520 may be to receive two consecutive training sequences TS1 on all lanes with a loopback bit set to 1b. For example, the device may enter the first configuration state CS1, and may then transition to the loopback state when receiving the received sequence satisfying the third transition condition 520 (520, Yes).

Alternatively, when the third transition condition 520 is not satisfied (520, No), the device may be maintained in the configuration state.

The device may set the speed change bit speed_change to '1b,' for example, to an active logic state when transitioning from the configuration state to the loopback state (525). The device may transmit and receive a training sequence including the speed change bit speed_change set to an active logic state. In an example embodiment, the device may transition from the configuration state to the loopback state based on the speed change bit speed_change included in the transmission sequence being set to an active logic state.

According to the above-described embodiments, when devices operate in a recovery state, a gray area for loopback entry may be specified in a perspective of a unidirectional port. For example, as illustrated in FIG. 9, when the devices 101 and 102 receive a received sequence satisfying both a first transition condition and a second transition condition in a state in which a priority of the first and second transition conditions is unclear, the devices 101 and 102 may transition to the loopback state or the configuration state. When the device enters the configuration state, the device may transition to the loopback state. However, when the device directly enters the loopback state, the device is unable to enter the configuration state without resetting a state. Accordingly, as illustrated in FIG. 10, the second transition condition determining a transition to the configuration state may be identified prior to the first transition, so that a grey area formed by existing transition conditions may be specified and a transition to the configuration state, in which a transition to the loopback state is likely to occur, may be first taken into consideration.

In addition, the grey area for loopback entry may be specified to block a malfunction, which is likely to occur, from a perspective of logic associated with a state machine.

FIG. 11 is a diagram illustrating an operation in a loopback state according to an example embodiment.

Referring to FIG. 11, when the device (e.g., the device 101 or the device 102) according to an example embodiment enters a loopback state, the device may have a first loopback state LS1. The device may transmit and receive training sequences in the first loopback state LS1.

The device may identify speed change bits speed_change for both a transmitted sequence and a received sequence (605). When both the speed change bit speed_change for the transmitted sequence and the speed change bit speed_change for the received sequence are the same as '1b,' for example, the active logic state (605, Yes), the device may change a data rate for one or more lanes to a maximum value (610). The maximum value may be predetermined and may be a highest data rate. For example, when both of the speed change bits speed_change are '1b' as illustrated in FIG. 11, the device may change a data rate to a highest data rate.

Then, the device may transition to a second loopback state LS2.

Alternatively, when the speed change bits speed_change are different from each other or both of the speed change bits speed_change are '0b,' for example, the inactive logic state (605, No), the device may transition to the second loopback state LS2. When both of the speed change bits speed_change are '0b,' the device does not transition from the configuration state, and thus does not need to change the data rate to the maximum data rate.

According to the above-described embodiments, even when the devices 101 and 102 transition from different states (for example, the recovery state and the configuration state) to the loopback state, data rates may be prevented from being different from each other. For example, in the case of FIG. 9, when one device transitions from the recovery state to the loopback state and the other device transitions from the configuration state to the loopback state, the other device should change a data rate to a maximum data rate, and in this case the data rates may not match each other. According to the present disclosure, the device (e.g., one of the devices 101 and 102) in the loopback state may change the data rate only when speed change bits speed_change of training sequences transmitted and received between the device and the other one of the devices 101 and 102 match each other, thereby preventing a semi-permanent defect state of the link 103 caused by the data rate mismatch.

According to the related art, when a semi-permanent defect state of a link 103 occurs, the link 103 should be recovered through an environment initialization such as power reboot or warm reboot. Meanwhile, according to the present disclosure, the link 103 may be recovered and an operation of the link 103 may be restarted through logic addition in the loopback state without environment initialization.

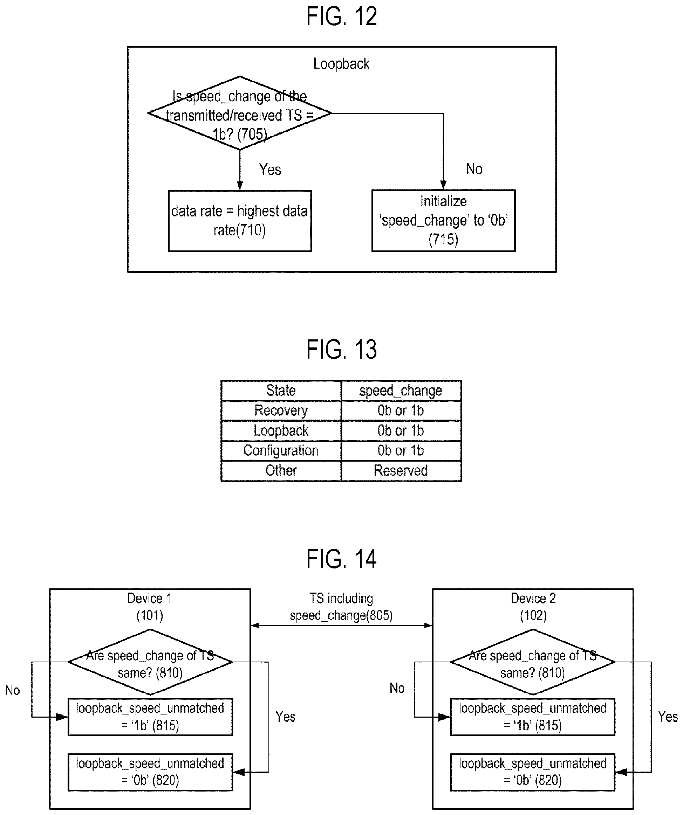

FIG. 12 is a diagram illustrating an operation in a loopback state according to an example embodiment.

Referring to FIG. 12, the device (e.g., the device 101 or the device 102) may identify a speed change bit speed_change for both a transmitted sequence and a received sequence transmitted and received by the devices 101 and 102 (705). When the speed change bit speed_change is the same as '1b' for both the transmitted sequence and the received sequence (705, Yes), the device may change a data rate for one or more lanes to a maximum value (710). The maximum value may be predetermined, and may be a highest data rate.

When the speed change bit speed_change is not the same as '1b' for both the transmitted sequence and the received sequence (705, No), for example, when either one of the devices 101 and 102 does not intend to change the speed, the device may initialize the speed change bit speed_change to '0b' (715). For example, the devices 101 and 102 may maintain the data rates.

In the case in which a certain issue occurs within an operating data rate when the devices 101 and 102 operate in the recovery state, the devices 101 and 102 may transition to the loopback state to intend to isolate the links 103. For example, changing a data rate should be taken into consideration only when the devices 101 and 102 unintentionally transition to the configuration state, rather than when the devices 101 and 102 directly transition from the recovery state to the loopback state. Accordingly, when one device intends to change a speed according to the transition operation whereas the other device does not intend to change a speed, all of the devices may maintain current data speeds.

In addition, as described above, when one of the devices 101 and 102 changes a data rate to a maximum data rate when speed change bits speed _change of a training sequence do not match each other, a semi-permanent defective state of the link 103 may also occur. Accordingly, when the speed change bits speed_change do not match each other, current data rates may be maintained to prevent a semi-permanent defect state of the link 103.

FIG. 13 is a diagram illustrating a speed change bit for each state according to an example embodiment.

Referring to FIG. 13, according to an example embodiment, the devices 101 and 102 may monitor speed change bits speed_change in a recovery state, a loopback state, and a configuration state, among states included in the LTSSM.

For example, the devices 101 and 102 may use the speed change bit speed_change in the recovery state, and may maintain the speed change bit speed_change to be '0b,' or change the speed change bit speed_change to '1b' in sub-states included in the recovery state.

For example, the device may monitor the speed change bit speed_change even in a loopback state and a configuration state. For example, the device may set the speed change bit speed_change to '1b' when transitioning from the configuration state to the loopback state according to the above-described embodiments. The device may transmit and receive a training sequence in which the speed change bit speed_change is set to '1b.'

The device may transition to the loopback state based on transmission of a training sequence, in which the speed change bit speed_change is set to '1b' when the configuration state transition from the recovery state or a polling state. For example, the device may transition from the configuration state to the loopback state when transmitting a training sequence in which the speed change bit speed_change is set to '1b' downstream or upstream.

The device may monitor the speed change bit speed_change in the loopback state, and may perform a speed change operation only when speed change bits speed_change match each other between training sequences transmitted and received according to the above-described embodiments.

FIG. 14 is a diagram illustrating an operation of configuring flag bits according to an example embodiment.

Referring to FIG. 14, in an example embodiment, the devices 101 and 102 may manage a flag bit loopback_speed_unmatched. The flag bit loopback speed _unmatched may be a variable managed internally by each of the devices 101 and 102. The flag bit loopback_speed_unmatched may indicate whether speed change bits speed_change match each other between training sequences transmitted and received by the devices 101 and 102.

The devices 101 and 102 may transmit and receive a training sequence, including a speed change bit speed_change, to and from each other (805).

The devices 101 and 102 may determine whether speed change bits speed_change of the transmitted and received training sequences are the same (810). For example, in some example embodiments, the devices 101 and 102 may determine whether all of the speed change bits speed_change are '1b.'

When the speed change bits speed_change are not the same (810, No), the devices 101 and 102 may set and manage the flag bit (loopback_speed_unmatched) to '1b' (815). The flag bit loopback_speed_unmatched set to '1b' implies that the speed change bits speed_change do not match each other. On the other hand, when the speed change bits speed_change are the same (810, Yes), the device 101 and 102 may set and manage the flag bit (loopback_speed_unmatched) to '0b' (820).

In an example embodiment, the devices 101 and 102 may perform logics of 805 to 820 before transitioning to the loopback state. In this case, the devices 101 and 102 transitioning to the loopback state may identify the flag bit loopback_speed_unmatched and may change or maintain a data rate according to the flag bit loopback_speed_unmatched. For example, the devices 101 and 102 may maintain the data rate and a loopback operation when the flag bit loopback_speed_unmatched is '1b,' and may change the data rate when the flag bit loopback_speed_unmatched is '0b.'

In an example embodiment, the devices 101 and 102 may set the flag bit loopback_speed_unmatched to '0b,' for example, initialize the flag bit loopback_speed_unmatched, based on a transition to a detect state. For example, according to the PCIe specification, the detect state may include a sub-detect state Detect.Quiet for initializing an existing variable and identifying a signal stability state. The devices 101 and 102 may initialize the flag bit loopback _speed_unmatched when entering the sub detect state Detect. Quiet.

In an example embodiment, the devices 101 and 102 may transition to the loopback state when the flag bit loopback _speed_unmatched is set to '1b' and a current state is the configuration state.

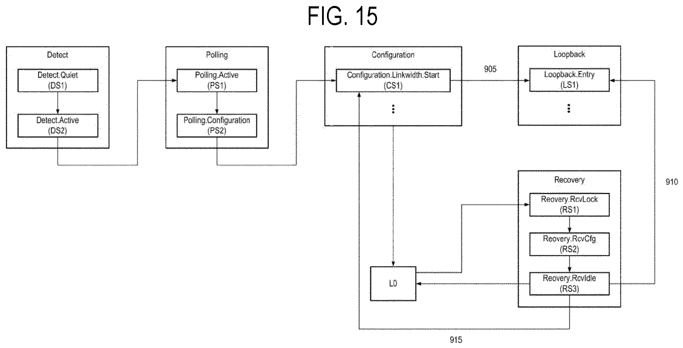

FIG. 15 is a diagram illustrating a transition operation between states included in an LTSSM according to an example embodiment.

Referring to FIG. 15, the devices 101 and 102 may initially operate in a first detect state Detect.Quiet (DS1) included in the detect state. The first detect state DS1 may be a state in which the devices 101 and 102 initially stand by and may initialize variables and/or registers to control physical layers.

Then, the devices 101 and 102 may transition from the first detect state (DS1) to a second detect state Detect.Active (DS2). In the second detect state DS2, the devices 101 and 102 may select an operable lane, among a plurality of lanes, and may check whether a physical environment for transmitting packets is configured for each lane.

Then, the devices 101 and 102 may transition from the detecting state to a polling state. In a first pooling state Polling.Active (PS1) that the devices 101 and 102 enter first, the devices 101 and 102 may initially transmit a packet such as a training sequence. The devices 101 and 102 may identify a reference point for normally decoding the packet in the first polling state PS1.

Then, the devices 101 and 102 may transition from the first pooling state PS1 to a second pooling state Polling. Configuration (PS2). In the second polling state PS2, the devices 101 and 102 may check an internal configuration of each lane.

Then, the devices 101 and 102 may transition from the polling state to the configuration state. The devices 101 and 102 may configure a link width in the first configuration state CS1. In this case, when receiving two received sequences in which loopback bits are set to '1b' for all lanes, the devices 101 and 102 may directly transition to the loopback state without configuring the link width (905).

Alternatively, the devices 101 and 102 may transition to L0 when the operation in the configuration state is completed.

When an error occurs while the devices 101 and 102 operate in L0 or there is a need to change a set data rate, the devices 101 and 102 may transition to a recovery state from L0.

The devices 101 and 102 may initially enter a first recovery state RS1, and may transition to a second recovery state RS2 to exchange variables required for equalization after the data rate is changed.

The devices 101 and 102 may transition from the second recovery state RS2 to a third recovery state RS3 to finally check the link 103. When the link 103 is identified to be normal, the devices 101 and 102 may transition from the third recovery state RS3 to L0.

Alternatively, a transition 910 from the third recovery state RS3 to the loopback state may be performed according to the above-described embodiments. For example, the devices 101 and 102 may transition to the loopback state when a single symbol included in the two received sequences received in the third recovery state RS3 includes a lane number and the loopback bit is '1b.'

Alternatively, a transition 915 from the third recovery state RS3 to the configuration state may be performed according to the above-described embodiments. For example, the devices 101 and 102 may transition to the configuration state when a single symbol included in two received sequences received in the third recovery state RS3 includes a special symbol.

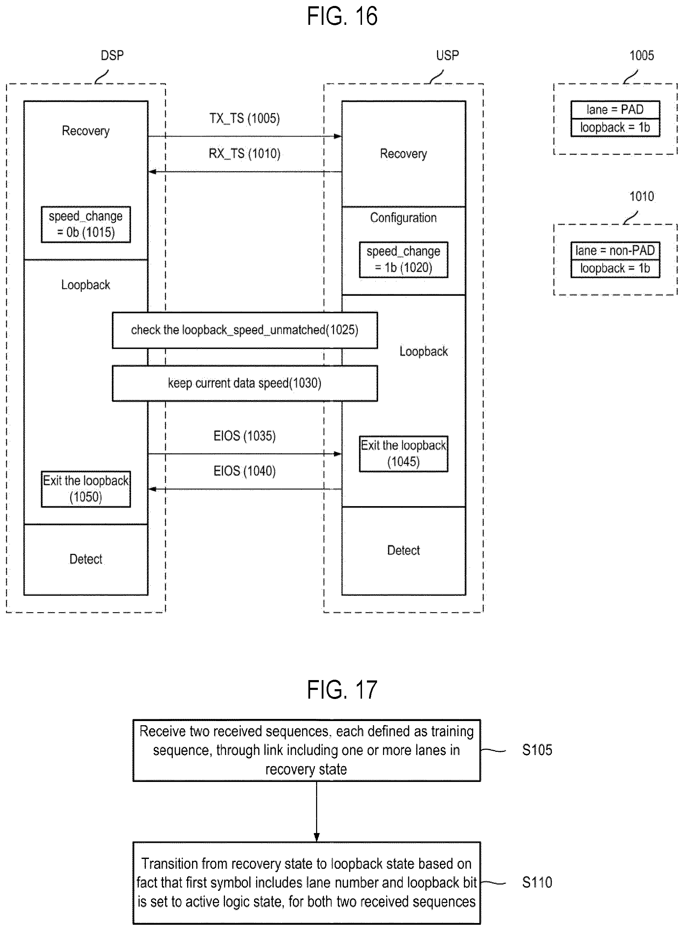

FIG. 16 is a diagram illustrating a state transition operation between ports according to an example embodiment.

Referring to FIG. 16, a downstream port DSP and an upstream port USP may transmit and receive packets downstream and upstream, respectively. The downstream port DSP may be included in or correspond to one of the above-described first device 101 and the second device 102, and the upstream port USP may be included in or correspond to the other device (i.e., the other one of the above-described first device 101 and the second device 102).

The downstream port DSP may transmit a transmitted sequence TX_TS 1005 to the upstream port USP. For example, for all lanes, a single symbol included in the transmitted sequence 1005 may include a special symbol, and a loopback bit included in the transmitted sequence 1005 may be set to '1b.'

The upstream port USP may transmit a receive sequence RX_TS 1010 to the downstream port DSP. For example, a single symbol included in the received sequence 1010 may include lane numbers for one or more lanes, and a loopback bit included in the received sequence 1010 may be setto '1b.' For example, the transmitted sequence 1005 and the received sequence 1010 may be different from each other.

In FIG. 16, the transmitted sequence TX_TS 1005 and the received sequence RX_TS 1010 each correspond to a training sequence and are respectively defined as a 'transmitted sequence' and a 'received sequence' in a perspective of the downstream port DSP, for ease of description.

Since the single symbol included in the received sequence 1010 includes the lane number and the loopback bit is set to '1b,' the downstream port DSP may directly transition from the recovery state to the loopback state. The downstream port DSP may maintain the speed change bit speed_change to be '0b' (1015).

Since the single symbol included in the transmitted sequence 1005 includes the special symbol, the upstream port USP may transition from the recovery state to the configuration state. According to an example embodiment, the upstream port USP may set the speed change bit speed_change to '1b' when transitioning from the configuration state to the loopback state (1020).

Then, each of the downstream port DSP and the upstream port USP may transition to the loopback state based on the fact that the loopback bit is '1b.' Each of the downstream port DSP and the upstream port USP may identify/check a flag bit loopback_speed_unmatched (1025). Since the speed change bits speed_change transmitted by the respective ports are different from each other, the flag bit loopback_speed_unmatched may be set to '1b.'

Since the flag bit loopback_speed_unmatched is set to '1b,' the downstream port DSP and the upstream port USP may maintain the data rates thereof without changing the data rates (1030).

Then, the downstream port DSP and the upstream port USP transmit and receive Electrical Idle Ordered Sets (EIOS) for low-power operation to and from each other (1035 and 1040), the upstream port USP may decode the EIOS to transition to a detect state (1045), and the downstream port DSP may decode the EIOS to transition to the detect state (1050). For example, in the case in which the downstream port DSP and the upstream port USP support a data rate of 2.5 GT/s, the downstream port DSP and the upstream port USP may transition to the detect state when one EIOS transmission is successfully decoded. For example, in the case in which the downstream port DSP and the upstream port USP support a data rate greater than 2.5 GT/s, the downstream port DSP and the upstream port USP may transition to the detect state when eight EIOS transmissions are successfully decoded.

According to the above-described embodiment, it may be identified that the speed change bits speed_change between different ports do not match each other, through the flag bit loopback_speed_unmatched, and a data rate may be maintained as it is. Accordingly, the port transitioning from the configuration state to the loopback state is not changed to a maximum data rate, so that a failure to decode an EIOS signal between ports and a semi-permanent defect of the link 103 may be prevented.

FIG. 17 is a flowchart illustrating a method of operating a device according to an example embodiment.

Referring to FIG. 17, in operation S105, a device receives two received sequences, each defined as a training sequence, through a link 103 including one or more lanes in a recovery state included in an LTSSM. In some example embodiments, the device may receive two consecutive received sequences. The training sequence includes a first symbol, including a lane number or a special symbol, and a second symbol including a loopback bit. For example, the first symbol may be symbol 2 illustrated in FIG. 4 and the second symbol may be symbol 5 illustrated in FIG. 4.

In operation S110, the device transitions from a recovery state to a loopback state included in the LTSSM based on the fact that the first symbol includes the lane number and the loopback bit is set to an active logic state, for both of the two received sequences.

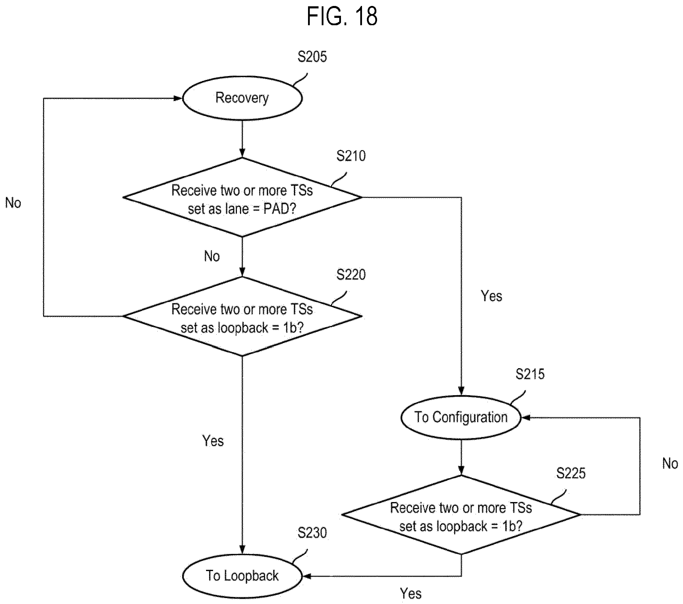

FIG. 18 is a flowchart illustrating a state transition operation method of a device according to an example embodiment.

Referring to FIG. 18, in operation S205, the device may be in a recovery state.

In operation S210, the device may determine whether a first symbol for one or more lanes includes a special symbol, e.g., PAD, for both of two received sequences. When the first symbol for one or more lanes includes a special symbol for both of two received sequences (S210, Yes), the device may transition to a configuration state in operation S215. Alternatively, when a first symbols for all lanes include lane numbers (S210, No), the device performs operation S220.

The device transitioning to a configuration state may receive the two received sequences through the link 103 in operation S225 and may determine whether loopback bits for all lanes are set to an active logic state, e.g., 1b, for both of the two receive sequences. When the loopback bits for all lanes are set to an active logic state for both of the two receive sequences (S225, Yes), the device may transition to the loopback state in operation S230. Alternatively, when the loopback bit for one or more lanes is set to an inactive logic state (S225, No), the device may be maintained in a configuration state.

In operation S220, the device determines whether the loopback bit for one or more lanes is set to an active logic state, e.g., 1b, for both of the two received sequences. When the loopback bit for one or more lanes is set to an active logic state for both of the two received sequences (S220, Yes), the device transitions to the loopback state in operation S230. Alternatively, when the loopback bits for all lanes are set to an inactive logic state (S220, No), the device may be maintained in the recovery state.

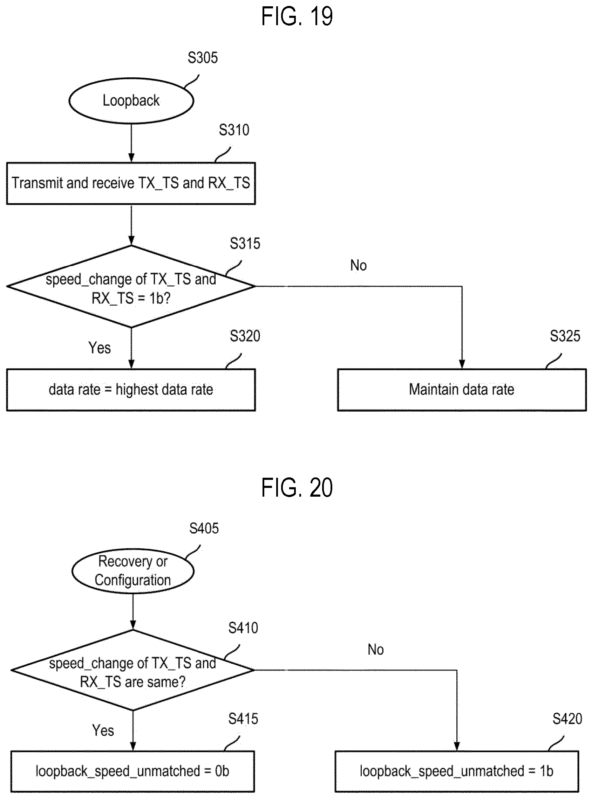

FIG. 19 is a flowchart illustrating a data rate change operation method according to an example embodiment.

Referring to FIG. 19, in operation S305, the device may be in a loopback state.

In operation S310, the device may transmit a transmitted sequence TX_TS and receive a received sequence RX_TS, each defined as a training sequence, in a loopback state.

In operation S315, the device may identify speed change bits speed _change for both a transmitted sequence and a received sequence, and may determine whether all of the speed change bits speed_change are set to '1b.' In an example embodiment, operation S315 may be performed based on the flag bit loopback_speed_unmatched. For example, when the flag bit loopback_speed_unmatched is set to '1b,' it may be determined that a data rate of the device does not match a data rate of another device.

When all of speed change bits speed _change are set to '1b' (S315, Yes) the device may change the data rate to a highest data rate in operation S320. For example, when the speed change bits speed_change for both the transmitted sequence and the received sequence are the same, the device may change a data rate of one or more lanes to a maximum value. The maximum value may be predetermined.

Alternatively, when all of the speed change bits speed_change are not set to '1b' (S315, No), the device may maintain a current data rate in operation S325. For example, the device may maintain the data rate for one or more lanes when the speed change bits speed_change for both the transmitted sequence and the received sequence are different from each other.

FIG. 20 is a flowchart illustrating a flag bit configuration operation method according to an embodiment.

Referring to FIG. 20, in operation S405, the device may be in a recovery state or a configuration state.

In operation S410, the device may determine whether speed change bits speed_change of the transmitted sequence TX_TS and the received sequence RX_TS are the same.

When the speed change bits speed_change of the transmitted sequence and the received sequence are the same (S410, Yes), the device may set the flag bit loopback_speed_unmatched to '0b' in operation S415. Then, the device may identify a flag bit loopback_speed_unmatched and may perform an operation based on the speed change bit speed_change. For example, when all of the speed change bits speed_change are '0b,' the device may maintain a current data rate, and when all of the speed change bits speed_change are '1b,' the device may change all data rates to a maximum data rate.

Alternatively, when the speed change bits speed_change of the transmitted sequence and the received sequence are not the same (S410, No), the device may set the flag bit loopback_speed_unmatched to '1b' in operation S420. Then, the device may identify the flag bit loopback _speed_unmatched and may maintain the current data rate.

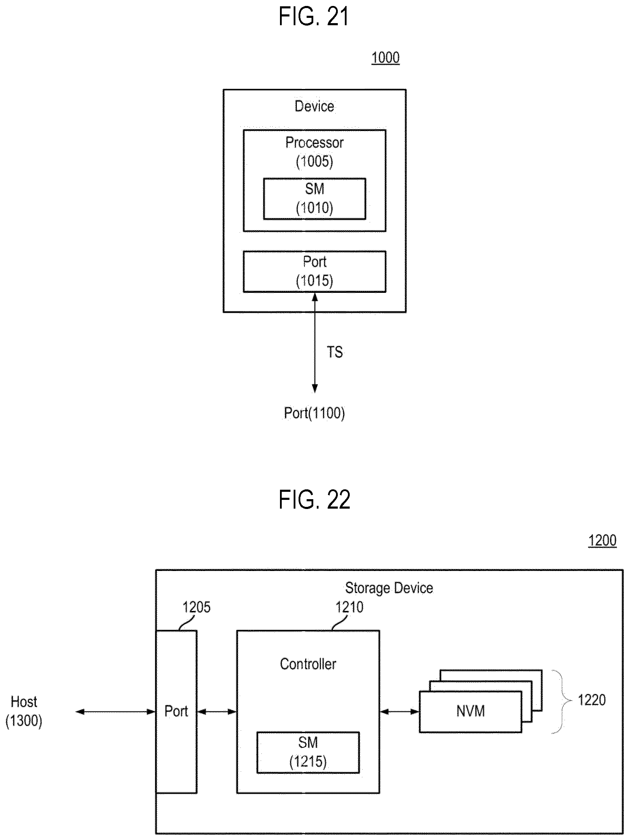

FIG. 21 is a diagram illustrating a device according to an example embodiment.

Referring to FIG. 21, a device 1000 according to an example embodiment may include a processor 1005 and a port 1015. According to various embodiments, the device 1000 may be a host such as a main or central processor, a root complex, a switch, an endpoint, or another component supporting communication with a host.

The processor 1005 may control the overall operation of the device 1000. In an embodiment, the processor 1005 may include a state machine SM 1010 and may control a transition operation between a plurality of states included in the state machine 1010. The processor 1005 may perform link training between ports 1015 based on state machine 1010.

The port 1015 may be connected to another port 1100 through a link. The port 1015 may be used to communicate with another port 1100 using an interconnect protocol. The device 1000 may transmit and receive a packet, including a training sequence TS, through the link to and from another port 1100 through the port 1015.

The device 1000 may perform link training based on the above-described various embodiments.

In an example embodiment, the device 1000 may receive two received sequences, each defined as a training sequence TS, through the link through via the port 1015. The processor 1005 may transition from a recovery state, included in the state machine 1010, to a loopback state based on the fact that a single symbol includes a lane number and a loopback bit is set to an active logic state for both received sequences.

FIG. 22 is a diagram illustrating a storage device according to an example embodiment.

Referring to FIG. 22, a storage device 1200 according to an example embodiment may include a port 1205, a controller 1210, and a nonvolatile memory 1220. The storage device 1200 may be connected to a host 1300.

In an example embodiment, the storage device 1200 may be a solid-state drive (SSD), universal flash storage (UFS), or embedded multimedia controller (eMMC). In some example embodiments, the storage device 1200 may be a secure digital (SD) card, a micro SD card, a memory stick, a chip card, a universal serial bus (USB) card, or a smart card, a compact flash (CF) card, or the like, but example embodiments are not limited thereto.

In an example embodiment, the storage device 1200 may be implemented as 3.5 inch, 2.5 inch, 1.8 inch, M.2, U.2, U.3, enterprise and data center SSD form factor (EDSFF), new form factor 1 (NF1), and/or a form factor similar thereto.

In an example embodiment, the storage device 1200 may be implemented as a small computer system interface (SATA), a small computer system interface (SCSI), a serial attached SCSI (SAS), and/or an interface similar thereto, and may be implemented as a peripheral component interconnect (PCI), PCI express (PCIe), nonvolatile memory express (NVMe), NVMe-over-Fabrics (NVMe-oF), Ethernet, InfiniBand, Fiber Channel, and/or a protocol similar thereto.

The controller 1210 may be connected to the nonvolatile memory 1220 and the port 1205 to control the overall operation of the storage device 1200 including the nonvolatile memory 1220. The controller 1210 may perform operations according to the above-described various embodiments.

In an example embodiment, the controller 1210 may control a link based on a state machine SM 1215. The controller 1210 may control the port 1205 to receive two received sequences, each defined as a training sequence, through the link in a recovery state included in the state machine 1215. The controller 1210 may transition from the recovery state to a loopback state included in state machine 1215 for both received sequences, based on the fact that a single symbol includes a lane number and a loopback bit is set to an active logic state.

The nonvolatile memory 1220 may be controlled by the controller 1210. The nonvolatile memory 1220 may store data transmitted from the host 1300 device, data generated by the storage device 1200, or other various types of data written by the controller 1210. In an example embodiment, the nonvolatile memory 1220 may be any nonvolatile memory such as a NAND flash memory, a phase change random access memory (PRAM), a resistance random access memory (RRAM), a nano floating gate memory (NFGM), a polymer random access memory (PoRAM), a magnetic random access memory (MRAM), a ferroelectric random access memory (FRAM), or the like, but example embodiments are not limited thereto.

As set forth above, according to example embodiments, a device for preventing a collision of transition operations between states in a state machine and a deadlock state in a state and a method of operating the same may be provided.

While example embodiments have been shown and described above, it will be apparent to those skilled in the art that modifications and variations could be made without departing from the scope of the present disclosure as defined by the appended claims.

## Claims

1. A device (101, 1000) comprising:
a port (1015) connected to a link (103) comprising one or more lanes (La1, La2, La3, La4) to support communication between the device (101, 1000) and another device (102, 1100); and
a controller configured to control the link (103) based on a link training and status state machine, LTSSM,
wherein:
the port (1015) is adapted to receive two received sequences, each defined as a training sequence, through the link (103) in a recovery state (RS) included in the LTSSM, the training sequence comprising a first symbol including a lane number or a special symbol, and a second symbol including a loopback bit, and **characterized in that**
the controller is adapted to transition from the recovery state (RS) to a loopback state (LS) included in the LTSSM, based on the first symbol including the lane number and the loopback bit being set to an active logic state, for both of the two received sequences.

2. The device (101, 1000) of claim 1, wherein:
the controller is adapted to transition from the recovery state (RS) to a configuration state (CS) included in the LTSSM based on the first symbol including the special symbol.

3. The device (101, 1000) of claim 2, wherein:
the port (1015) is adapted to receive two different received sequences, each defined as the training sequence, through the link in the configuration state (CS), and
the controller is adapted to transition from the configuration state (CS) to the loopback state (LS) for both of the two different received sequences based on the loopback bit being set to the active logic state.

4. The device (101, 1000) of any preceding claim, wherein:
the training sequence comprises a third symbol including a speed change bit indicating a change in speed,
the port (1015) is adapted to transmit a transmitted sequence and receive another received sequence, each defined as the training sequence, in the loopback state (LS), and
the controller is adapted to identify the speed change bit for both the transmitted sequence and the another received sequence.

5. The device (101, 1000) of claim 4, wherein:
the controller is adapted to change a data rate for one or more lanes to a maximum value when a value of the speed change bit is the same for both the transmitted sequence and the another received sequence.

6. The device (101, 1000) of claim 4, wherein:
the controller is adapted to maintain a data rate for the one or more lanes when a value of the speed change bit for the transmitted sequence is different from a value of the speed change bit for the another received sequence.

7. The device (101, 1000) of claim 2, wherein:
the training sequence comprises a third symbol including a speed change bit indicating a change in speed,
the controller is adapted to transmit a transmitted sequence, defined as the training sequence, in the configuration state (CS), and
the device (101, 1000) is adapted to transition from the configuration state (CS) to the loopback state (LS) based on the speed change bit that is being set to the active logic state.

8. The device (101, 1000) of claim 4, wherein:
the controller is adapted to manage a flag bit indicating whether a value of the speed change bit for the transmitted sequence is the same as a value of the speed change bit for the another received sequence.

9. The device (101, 1000) of claim 8, wherein:
the flag bit has the active logic state when the value of the speed change bit for the transmitted sequence is not the same as the value of the speed change bit for the another received sequence.

10. The device (101, 1000) of claim 8 or 9, wherein:
the controller is adapted to set the flag bit to an inactive logic state based on a transition to a detect state included in the LTSSM.

11. The device (101, 1000) of any of claims 8 to 10, wherein:
the controller is adapted to maintain a data rate for the one or more lanes based on the flag bit having the active logic state.

12. The device (101, 1000) of claim 2, wherein:
the training sequence comprises a third symbol including a speed change bit indicating a change in speed, and
the controller is adapted to set the speed change bit to the active logic state during a transition from the configuration state (CS) to the loopback state (LS).

13. A method of operating a device (101, 1000), the method comprising:
receiving (S105) two received sequences, each defined as a training sequence, through a link (103) comprising one or more lanes (La1, La2, La3, La4) in a recovery state (RS) included in a link training and status state machine, LTSSM, the training sequence comprising a first symbol including a lane number or a special symbol, and a second symbol including a loopback bit; and **characterized in that** the method further comprising:
transitioning (S110) from the recovery state (RS) to a loopback state (LS) included in the LTSSM, based on the first symbol including the lane number and the loopback bit being set to an active logic state, for both of the two received sequences.

14. The method of claim 13, further comprising:
transitioning from the recovery state (RS) to a configuration state (CS), included in the LTSSM, based on the first symbol including the special symbol.

15. The method of claim 14, further comprising:
receiving two different received sequences, each defined as the training sequence, through the link in the configuration state (CS); and
transitioning from the configuration state (CS) to the loopback state (LS), for both of the two different received sequences, based on the loopback bit being set to the active logic state.

## Patentansprüche

1. Vorrichtung (101, 1000), umfassend:
einen Anschluss (1015), der mit einem Link (103) verbunden ist, der eine oder mehrere Spuren (La1, La2, La3, La4) umfasst, um Kommunikation zwischen der Vorrichtung (101, 1000) und einer anderen Vorrichtung (102, 1100) zu unterstützen; und
eine Steuereinheit, die konfiguriert ist, um den Link (103) basierend auf einer Link-Trainings- und Statuszustandsmaschine, LTSSM, zu steuern,
wobei:
der Anschluss (1015) angepasst ist, um zwei empfangene Sequenzen, die jeweils als Trainingssequenz definiert sind, über den Link (103) in einem in der LTSSM beinhalteten Wiederherstellungszustand (RS) zu empfangen, wobei die Trainingssequenz ein erstes Symbol, das eine Spurnummer oder ein Sondersymbol beinhaltet, und ein zweites Symbol umfasst, das ein Loopback-Bit beinhaltet, und **dadurch gekennzeichnet ist, dass**
die Steuereinheit angepasst ist, um vom Wiederherstellungszustand (RS) in einen in der LTSSM beinhalteten Loopback-Zustand (LS) basierend auf dem ersten Symbol überzugehen, das die Spurnummer und das Loopback-Bit beinhaltet, das für beide der zwei empfangenen Sequenzen auf einen aktiven Logikzustand gesetzt ist.

2. Vorrichtung (101, 1000) nach Anspruch 1, wobei:
die Steuereinheit angepasst ist, um vom Wiederherstellungszustand (RS) in einen Konfigurationszustand (CS), der in der LTSSM beinhaltet ist, basierend auf dem ersten Symbol, welches das Sondersymbol beinhaltet, überzugehen.

3. Vorrichtung (101, 1000) nach Anspruch 2, wobei:
der Anschluss (1015) angepasst ist, um über den Link im Konfigurationszustand (CS) zwei verschiedene empfangene Sequenzen zu empfangen, die jeweils als Trainingssequenz definiert sind, und
die Steuereinheit angepasst ist, um für beide der zwei empfangenen Sequenzen darauf basierend vom Konfigurationszustand (CS) in den Loopback-Zustand (LS) überzugehen, ob das Loopback-Bit auf den aktiven Logikzustand gesetzt ist.

4. Vorrichtung (101, 1000) nach einem vorstehenden Anspruch, wobei:
die Trainingssequenz ein drittes Symbol umfasst, das ein Geschwindigkeitsänderungsbit beinhaltet, das eine Geschwindigkeitsänderung angibt,
der Anschluss (1015) angepasst ist, um im Loopback-Zustand (LS) eine übertragene Sequenz zu übertragen und eine andere empfangene Sequenz zu empfangen, die jeweils als Trainingssequenz definiert sind, und
die Steuereinheit angepasst ist, um das Geschwindigkeitsänderungsbit für sowohl die übertragene Sequenz als auch die andere empfangene Sequenz zu identifizieren.

5. Vorrichtung (101, 1000) nach Anspruch 4, wobei:
die Steuereinheit angepasst ist, um die Datenrate für eine oder mehrere Spuren auf einen Maximalwert zu ändern, wenn ein Wert des Geschwindigkeitsänderungsbits für sowohl die übertragene Sequenz als auch die andere empfangene Sequenz gleich ist.

6. Vorrichtung (101, 1000) nach Anspruch 4, wobei:
die Steuereinheit angepasst ist, um eine Datenrate für die eine oder mehrere Spuren aufrecht zu erhalten, wenn sich ein Wert des Geschwindigkeitsänderungsbits für die übertragene Sequenz von einem Wert des Geschwindigkeitsänderungsbits für die andere empfangene Sequenz unterscheidet.

7. Vorrichtung (101, 1000) nach Anspruch 2, wobei:
die Trainingssequenz ein drittes Symbol umfasst, das ein Geschwindigkeitsänderungsbit beinhaltet, das eine Geschwindigkeitsänderung angibt,
die Steuereinheit angepasst ist, um im Konfigurationszustand (CS) eine übertragene Sequenz, die als Trainingssequenz definiert ist, zu übertragen, und
die Vorrichtung (101, 1000) angepasst ist, um darauf basierend vom Konfigurationszustand (CS) in den Loopback-Zustand (LS) überzugehen, dass das Geschwindigkeitsänderungsbit auf den aktiven Logikzustand gesetzt wird.

8. Vorrichtung (101, 1000) nach Anspruch 4, wobei:
die Steuereinheit angepasst ist, um ein Flag-Bit zu verwalten, das angibt, ob der Wert des Geschwindigkeitsänderungsbits für die übertragene Sequenz der gleiche ist, wie ein Wert des Geschwindigkeitsänderungsbits für die andere empfangene Sequenz.

9. Vorrichtung (101, 1000) nach Anspruch 8, wobei:
das Flag-Bit den aktiven logischen Zustand aufweist, wenn der Wert des Geschwindigkeitsänderungsbits für die übertragene Sequenz nicht der gleiche ist, wie der Wert des Geschwindigkeitsänderungsbits für die andere empfangene Sequenz.

10. Vorrichtung (101, 1000) nach Anspruch 8 oder 9, wobei:
die Steuereinheit angepasst ist, um das Flag-Bit basierend auf einem Übergang in einen in der LTSSM beinhalteten Erkennungszustand auf einen inaktiven Logikzustand zu setzen.

11. Vorrichtung (101, 1000) nach einem der Ansprüche 8 bis 10, wobei:
die Steuereinheit angepasst ist, um eine Datenrate für die eine oder mehrere Spuren darauf basierend aufrechtzuerhalten, dass das Flag-Bit den aktiven logischen Zustand aufweist.

12. Vorrichtung (101, 1000) nach Anspruch 2, wobei:
die Trainingssequenz ein drittes Symbol umfasst, das ein Geschwindigkeitsänderungsbit beinhaltet, das eine Geschwindigkeitsänderung angibt, und
die Steuereinheit angepasst ist, um das Geschwindigkeitsänderungsbit während eines Übergangs vom Konfigurationszustand (CS) zum Loopback-Zustand (LS) in den aktiven Logikzustand zu setzen.

13. Verfahren zum Betreiben einer Vorrichtung (101, 1000), wobei das Verfahren umfasst:
Empfangen (S105) zweier empfangener Sequenzen, die jeweils als Trainingssequenz definiert sind, über einen Link (103), der eine oder mehrere Spuren (La1, La2, La3, La4) umfasst, in einem Wiederherstellungszustand (RS), der in einer Link-Trainings- und Statuszustandsmaschine, LTSSM, beinhaltet ist, wobei die Trainingssequenz ein erstes Symbol umfasst, das eine Spurnummer oder ein Sondersymbol beinhaltet, und ein zweites Symbol umfasst, das ein Loopback-Bit beinhaltet, und **dadurch gekennzeichnet ist, dass** das Verfahren weiter umfasst:
Übergehen (S110) vom Wiederherstellungszustand (RS) in einen in der LTSSM beinhalteten Loopback-Zustand (LS) basierend auf dem ersten Symbol, das die Spurnummer und das Loopback-Bit beinhaltet, das für beide der zwei empfangenen Sequenzen auf einen aktiven Logikzustand gesetzt ist.

14. Verfahren nach Anspruch 13, weiter umfassend:
Übergehen vom Wiederherstellungszustand (RS) in einen Konfigurationszustand (CS), der in der LTSSM beinhaltet ist, basierend auf dem ersten Symbol, welches das Sondersymbol beinhaltet.

15. Verfahren nach Anspruch 14, weiter umfassend:
Empfangen über den Link im Konfigurationszustand (CS) zweier verschiedener empfangener Sequenzen, die jeweils als Trainingssequenz definiert sind; und
Übergehen vom Konfigurationszustand (CS) in den Loopback-Zustand (LS) für beide der zwei empfangenen Sequenzen darauf basierend, dass das Loopback-Bit auf den aktiven Logikzustand gesetzt ist.

## Revendications

1. Dispositif (101, 1000) comprenant :
un port (1015) connecté à une liaison (103) comprenant une ou plusieurs voies (La1, La2, La3, La4) pour prendre en charge la communication entre le dispositif (101, 1000) et un autre dispositif (102, 1100) ; et
un dispositif de commande configuré pour commander la liaison (103) sur la base d'un diagramme d'états de formation et de statut des liaisons, LTSSM,
dans lequel :
le port (1015) est adapté pour recevoir deux séquences reçues, chacune étant définie comme une séquence de formation, via la liaison (103) dans un état de rétablissement (RS) inclus dans le LTSSM, la séquence de formation comprenant un premier symbole incluant un numéro de voie ou un symbole spécial, et un deuxième symbole incluant un bit de bouclage, et est **caractérisé en ce que**
le dispositif de commande est adapté pour passer de l'état de rétablissement (RS) à un état de bouclage (LS) inclus dans le LTSSM, sur la base du premier symbole incluant le numéro de voie et le bit de bouclage étant mis à un état logique actif, pour les deux séquences reçues.

2. Dispositif (101, 1000) selon la revendication 1, dans lequel :
le dispositif de commande est adapté pour passer de l'état de rétablissement (RS) à un état de configuration (CS) inclus dans le LTSSM sur la base du premier symbole incluant le symbole spécial.

3. Dispositif (101, 1000) selon la revendication 2, dans lequel :
le port (1015) est adapté pour recevoir deux séquences reçues différentes, chacune étant définie comme la séquence de formation, via la liaison dans l'état de configuration (CS), et
le dispositif de commande est adapté pour passer de l'état de configuration (CS) à l'état de bouclage (LS) pour les deux séquences reçues différentes sur la base du bit de bouclage mis à l'état logique actif.

4. Dispositif (101, 1000) selon une quelconque revendication précédente, dans lequel :
la séquence de formation comprend un troisième symbole incluant un bit de changement de vitesse indiquant un changement de vitesse,
le port (1015) est adapté pour transmettre une séquence transmise et recevoir une autre séquence reçue, chacune étant définie comme la séquence de formation, dans l'état de bouclage (LS), et
le dispositif de commande est adapté pour identifier le bit de changement de vitesse à la fois pour la séquence transmise et pour une autre séquence reçue.

5. Dispositif (101, 1000) selon la revendication 4, dans lequel :
le dispositif de commande est adapté pour modifier un débit de données d'une ou plusieurs voies à une valeur maximale quand une valeur du bit de changement de vitesse est la même pour la séquence transmise et l'autre séquence reçue.

6. Dispositif (101, 1000) selon la revendication 4, dans lequel :
le dispositif de commande est adapté pour maintenir un débit de données pour les une ou plusieurs voies quand une valeur du bit de changement de vitesse pour la séquence transmise est différente d'une valeur du bit de changement de vitesse pour l'autre séquence reçue.

7. Dispositif (101, 1000) selon la revendication 2, dans lequel :
la séquence de formation comprend un troisième symbole incluant un bit de changement de vitesse indiquant un changement de vitesse,
le dispositif de commande est adapté pour transmettre une séquence transmise, définie comme la séquence de formation, dans l'état de configuration (CS), et
le dispositif (101, 1000) est adapté pour passer de l'état de configuration (CS) à l'état de bouclage (LS) sur la base du bit de changement de vitesse qui est mis à l'état logique actif.

8. Dispositif (101, 1000) selon la revendication 4, dans lequel :
le dispositif de commande est adapté pour gérer un bit indicateur indiquant si une valeur du bit de changement de vitesse pour la séquence transmise est la même qu'une valeur du bit de changement de vitesse pour l'autre séquence reçue.

9. Dispositif (101, 1000) selon la revendication 8, dans lequel :
le bit d'indicateur présente l'état logique actif lorsque la valeur du bit de changement de vitesse pour la séquence transmise n'est pas la même que la valeur du bit de changement de vitesse pour l'autre séquence reçue.

10. Dispositif (101, 1000) selon la revendication 8 ou 9, dans lequel :
le dispositif de commande est adapté pour mettre le bit d'indicateur à un état logique inactif sur la base d'une transition vers un état de détection inclus dans le LTSSM.

11. Dispositif (101, 1000) selon l'une quelconque des revendications 8 à 10, dans lequel :
le dispositif de commande est adapté pour maintenir un débit de données pour les une ou plusieurs voies sur la base du bit indicateur présentant l'état logique actif.

12. Dispositif (101, 1000) selon la revendication 2, dans lequel :
la séquence de formation comprend un troisième symbole incluant un bit de changement de vitesse indiquant un changement de vitesse, et
le dispositif de commande est adapté pour mettre le bit de changement de vitesse à l'état logique actif lors d'une transition de l'état de configuration (CS) à l'état de boucle (LS).

13. Procédé de fonctionnement d'un dispositif (101, 1000), le procédé comprenant :
la réception (S105) de deux séquences reçues, chacune étant définie comme une séquence de formation, via une liaison (103) comprenant une ou plusieurs voies (La1, La2, La3, La4) dans un état de rétablissement (RS) inclus dans un diagramme d'états de formation et de statut des liaisons, LTSSM, la séquence de formation comprenant un premier symbole incluant un numéro de voie ou un symbole spécial, et un deuxième symbole incluant un bit de bouclage, et **caractérisé en ce que** le procédé comprend en outre :
le passage (S110) de l'état de rétablissement (RS) à un état de bouclage (LS) inclus dans le LTSSM, sur la base du premier symbole incluant le numéro de voie et le bit de bouclage étant mis à un état logique actif, pour les deux séquences reçues.

14. Procédé selon la revendication 13, comprenant en outre :
le passage de l'état de rétablissement (RS) à un état de configuration (CS), inclus dans le LTSSM, sur la base du premier symbole incluant le symbole spécial.

15. Procédé selon la revendication 14, comprenant en outre :
la réception de deux séquences reçues différentes, chacune étant définie comme la séquence de formation, via la liaison dans l'état de configuration (CS) ; et
le passage de l'état de configuration (CS) à l'état de bouclage (LS), pour les deux séquences reçues différentes, sur la base du bit de bouclage mis à l'état logique actif.
